# EUROPÄISCHE PATENTSCHRIFT

(11) **EP 0 740 381 B1**
(45) Veröffentlichungstag und Bekanntmachung des Hinweises auf die Patenterteilung: **30.08.2000**
(21) Anmeldenummer: 96250093.0
(22) Anmeldetag: 25.04.1996
(51) Int. Cl.: H02H 7/09

(54) **Anordnung mit einem an ein elektrisches Energieversorgungsnetz angeschlossenen Leitungsabgang mit einem Leistungsschalter und mit einer Unter-Spannungs-Schutzanordnung**
Device with a line connecting to an electrical distribution network, with a circuit breaker and with an undervoltage protection
Dispositif avec une ligne de couplage de réseau de distribution électrique, avec un disjoncteur et avec dispositif de protection contre les sous-tensions

(30) Priorität: 25.04.1995 DE 19516614
(43) Veröffentlichungstag der Anmeldung: 30.10.1996
(73) Patentinhaber: SIEMENS AKTIENGESELLSCHAFT, 80333 München (DE)
(72) Erfinder: Fritschi, Jürgen, 13353 Berlin (DE)

(56) Entgegenhaltungen:
- DE-A- 4 232 476
- US-A- 4 453 117
- IBM TECHNICAL DISCLOSURE BULLETIN ANONYMOUS: 'MOTOR MALFUNCTION DETECTION' Bd. 18, Nr. 7, 01 Dezember 1975, NEW YORK, US, Seite 2062, XP002010381

## Beschreibung

Dem "Handbuch Schutztechnik" von W.Doemeland, 5. Auflage, 1995, Seite 118, ist entnehmbar, daß eine Unterspannungs-Schutzanordnung besonders in Anlagen mit Motorabgängen erforderlich ist. Dabei sind mit "Motorabgängen" offenbar Leitungsabgänge von einem elektrischen Energieversorgungsnetz gemeint, die mindestens einen Verbraucher in Form eines Motors enthalten und über einen Leistungsschalter an das Energieversorgungsnetz angeschlossen sind. Die Unterspannungs-Schutzanordnung kann dabei offensichtlich über eine Spannungswandler-Anordnung an den Leitungsabgang angeschlossen sein. Bei der bekannten Anordnung ist die Unterspannungs-Schutzanordnung mit einem nachgeschalteten Zeitglied versehen, mit dem anscheinend sichergestellt werden soll, daß bei einem nur sehr kurzzeitigen Absinken der Spannung unter einen kritischen Spannungsschwellenwert nicht sofort die Unterspannungs-Schutzanordnung angeregt wird und den Leistungsschalter auslöst. Erst wenn bei der bekannten Anordnung nach einem Absinken der Spannung unter den Spannungsschwellenwert die durch das nachgeschaltete Zeitglied definierte Zeitdauer abgelaufen ist und die erfaßte Spannung dann immer noch unterhalb des vorgegebenen Spannungsschwellenwertes liegt, wird von der Unterspannungs-Schutzanordnung der Leistungsschalter ausgelöst und damit der Leitungsabgang von dem elektrischen Energieversorgungsnetz abgetrennt.

Die Entgegenhaltung US-A-4,453,117 zeigt eine Anordnung gemäß Oberbegriff von Anspruch 1 mit
- einem an ein elektrisches Energieversorgungsnetz L1, L2, L3 angeschlossenen Leitungsabgang,
- mit einem Leistungsschalter M1, M2, M3 (contactor),
- mit mindestens einem Motor,
- mit einer Unterspannungs-Schutzanordnung (control unit) für den mindestens einen Motor,
- wobei die Unterspannungs-Schutzanordnung über eine Spannungswandler-Anordnung an den Leitungsabgang angeschlossen ist, und
- die Unterspannungs-Schutzanordnung über eine Stromwandler-Anordnung mit dem Leitungsabgang verbunden ist.

Die DE-A-42 32 476 beschreibt eine Anordnung zur Drehstromnetzüberwachung, welche an ihrem Ausgang getrennte oder logisch verknüpfte Signale für Unterspannung oder Überspannung und Phasenausfall erzeugt.

Das IBM Technical Disclosure Bulletin beschreibt eine Einrichtung welche davon ausgeht, daß eine Spannung oberhalb eines Grenzwerts auch einen Strom oberhalb eines Grenzwerts nach sich zieht.
Wird im Falle einer Überspannung kein Überstrom erkannt, erzeugt diese Einrichtung eine Fehlermeldung, da ein Motor leer läuft oder ein Masseschluß des Leistungsausgangs vorliegt oder ein Strommeßwiderstrand kurzgeschlossen ist.

Die Erfindung stellt sich die Aufgabe, diese Anordnung so auszugestalten, daß ein Hochlaufen des mindestens einen Motors aus dem Stand nur bei einer ausreichend hohen Spannung erfolgen kann.

Zur Lösung dieser Aufgabe ist bei der oben behandelten Anordnung erfindungsgemäß die Unterspannungs-Schutzanordnung so ausgebildet, daß sie ein Stromunterschreitungssignal bildet, wenn der mittels der Stromwandler-Anordnung ermittelte Strom durch den Leitungsabgang unterhalb eines vorgegebenen Stromschwellenwertes liegt, dieses Stromunterschreitungssignal nach einem Anstieg des Stromes über den Stromschwellenwert für eine vorgewählte Zeitdauer aufrecht erhält, während des Stromunterschreitungssignals einen gegenüber dem üblichen Spannungs-Anregewert erhöhten Spannungsschwellenwert definiert und ein Anregesignal erzeugt, wenn die mittels der Spannungswandler-Anordnung erfaßte Spannung an dem Leitungsabgang während des Stromunterschreitungssignals unter den erhöhten Spannungsschwellenwert absinkt.

Der wesentliche Vorteil der erfindungsgemaßen Anordnung besteht darin, daß bei ihr von der Unterspannungs-Schutzanordnung ein Anregesignal dann erzeugt wird, wenn während des Stromunterschreitungssignals die Spannung unter den erhöhten Spannungsschwellenwert absinkt, weil dies ein Anzeichen dafür ist, daß die Spannung zum Hochlaufen des mindestens einen Motors nicht ausreichend ist.

Zur Erläuterung der Erfindung ist in
- Figur 1: ein Ausführungsbeispiel einer erfindungsgemäßen Anordnung, in
- Figur 2: ein Logik-Diagramm zur Erläuterung der Wirkungsweise der in Figur 1 dargestellten Anordnung und in
- Figur 3: eine Darstellung mit mehreren Zeitdiagrammen zur weiteren Erläuterung der Wirkungsweise der Anordnung nach Figur 1 wiedergegeben.

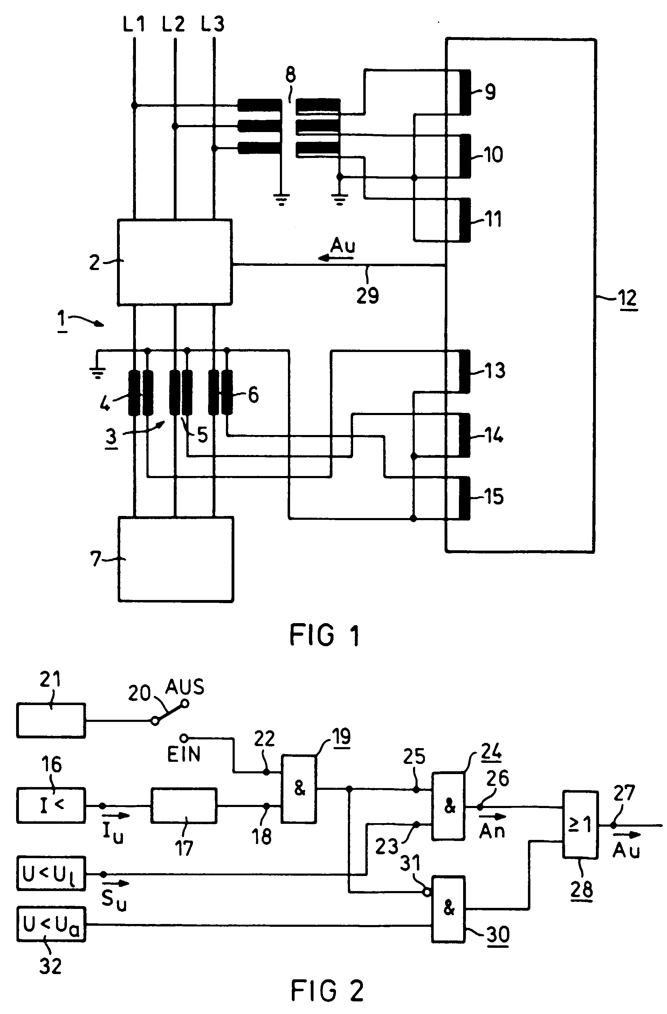

Die in Figur 1 dargestellte Anordnung weist einen Leitungsabgang 1 mit Leitungen L1, L2 und L3 auf, in deren Verlauf ein Leistungsschalter 2 und über eine Stromwandler-Anordnung 3 mit Stromwandlern 4, 5 und 6 ein Motor 7 angeordnet ist. Der Leistungsschalter 2 ist auf seiner von dem Motor 7 abgewandten Seite an ein nicht dargestelltes elektrisches Energieversorgungsnetz, z.B. eine Sammelschiene, angeschlossen.

Wie die Figur 1 ferner erkennen läßt, ist an den Leitungsabgang 1 mit den Leitungen L1 bis L3 primärseitig auch eine Spannungswandler-Anordnung 8 angeschlossen, die sekundärseitig über Wicklungen 9, 10 und 11 den Spannungen an den Leitungen L1 bis L3 proportionale Spannungen an eine Unterspannungs-Schutzanordnung 12 überträgt. Über weitere Wicklungen 13, 14 und 15 der Unterspannungs-Schutzanordnung 12, die an Sekundärwicklungen der Stromwandler-Anordnung 3 angeschlossen sind, wird die Unterspannungs-Schutzanordnung 12 mit den Strömen in den Leitungen L1 bis L3 proportionalen Strömen versorgt.

In der Unterspannungs-Schutzanordnung 12, die im wesentlichen aus einer Datenverarbeitungsanlage besteht, werden aus den analogen Größen an den Wicklungen 9 bis 11 sowie 13 bis 15 entsprechende digitale Eingangsgrößen gebildet, die - wie nachstehend im einzelnen erläutert wird - in verschiedener Hinsicht untersucht und verarbeitet werden.

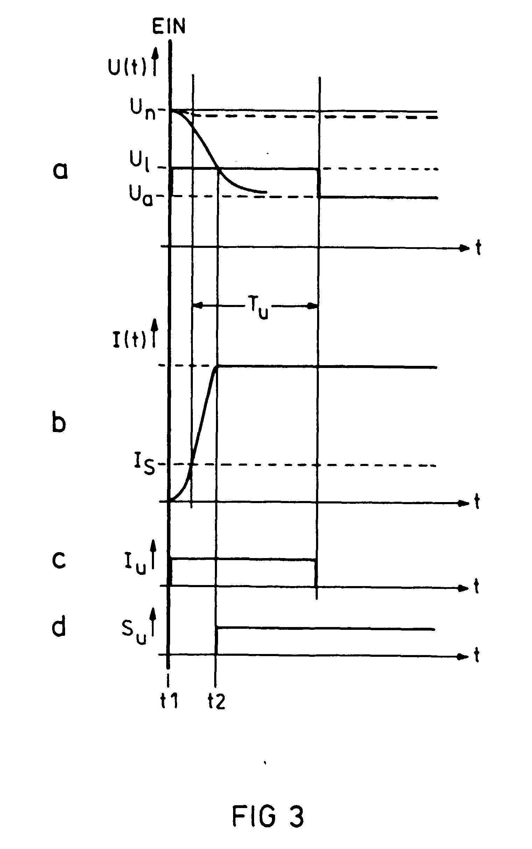

So wird in der Unterspannungs-Schutzanordnung 12 der jeweils größte Strom in den Leitungen L1 bis L3 erfaßt und darauf untersucht, ob er unterhalb eines Stromschwellenwertes I_{S} liegt (vgl. Diagramm b der Fig. 3). Ist dies der Fall, dann wird von einem Block 16 ein Stromunterschreitungssignal Iᵤ erzeugt, das für eine durch ein Zeitglied 17 (vgl. Figur 2) bestimmte Zeitdauer Tᵤ nach einem Anstieg des Stromes I(t) über den Stromschwellenwert I_{S} an einem Eingang 18 eines dem Zeitglied 17 nachgeordneten UND-Gliedes 19 ansteht. Ist über einen in eine "Ein"-Stellung gebrachten Kontakt 20 ein Impulsgeber 21 angeschlossen, dann wird einem weiteren Eingang 22 des UND-Gliedes 19 ein "1"-Signal zugeführt, woraufhin am Ausgang des UND-Gliedes 19 ein "1"-Signal gebildet wird. Das Diagramm c der Figur 3 zeigt, daß zum Zeitpunkt t1, zu dem beispielsweise der Leistungsschalter 2 geschlossen wird, das Stromunterschreitungssignal Iᵤ auftritt und bis nach Ablauf der vorgewählten Zeitdauer Tᵤ nach einem Anstieg des Stromes I(t) über den Stromschwellenwert Iₛ aufrecht erhalten wird und am Ausgang des UND-Gliedes 19 erhalten bleibt.

Wie insbesondere das Diagramm a der Figur 3 zeigt, ist in der Unterspannungs-Schutzanordnung 12 mit dem Auftreten des Stromunterschreitungssignals Iᵤ von dem üblichen Spannungs-Anregewert Uₐ auf einen erhöhten Spannungsschwellenwert Uₗ umgeschaltet worden. Zum Zeitpunkt t2 unterschreitet die Spannung U(t) in dem dargestellten Fall (ausgezogener Spannungsverlauf) den erhöhten Spannungsschwellenwert Uₗ. Als Spannung U(t) wird dabei die jeweils kleinste Spannung an den Leitungen L1 bis L3 des Leitungsabganges 1 verwendet. Es ergibt sich dann an einem Eingang 23 eines weiteren UND-Gliedes 24 (siehe Figur 2) ein Spannungsunterschreitungssignal Sᵤ mit dem Wert"1",wie es im Diagramm d der Figur 3 veranschaulicht ist.

Da zum Zeitpunkt t2 nach wie vor das Stromunterschreitungssignal Iᵤ an einem anderen Eingang 25 des weiteren UND-Gliedes 24 ansteht (vgl. Diagramm c der Figur 3), wird am Ausgang 26 des weiteren UND-Gliedes 24 zum Zeitpunkt t2 ein Anregesignal An erzeugt, woraufhin an einem Ausgang 27 eines nachgeordneten ODER-Gliedes 28 ein Auslösesignal Au auftritt, das über eine Verbindungsleitung 29 auf den Leistungsschalter 2 übertragen wird.

Der Leistungsschalter 2 öffnet daraufhin, wodurch der Leitungsabgang 1 von dem nicht dargestellten elektrischen Energieversorgungsnetz abgetrennt wird. Dies bedeutet, daß der Hochlauf-Vorgang des Motors 7 abgebrochen worden ist. Die vorgewählte Zeitdauer Tᵤ ist dabei motorspezifisch bemessen.

In Abweichung von dem dargestellten Ausführungsbeispiel ist es auch möglich, ein Anregesignal jeweils leitungsselektiv zu bilden, indem die oben erläuterten Untersuchungen mit Strom und Spannung jeweils einer Leitung für sich getrennt durchgeführt werden.

Nimmt die Spannung U(t) beim Hochlaufen des Motors 7 einen zeitlichen Verlauf, wie er dick strichliert im Diagramm a der Fig. 3 gezeigt ist, dann erfolgt keine Anregung, weil die Spannung U(t) in diesem Falle ihren Nennwert Uₙ nahezu beibehält. In diesem Fall liegt ein gelungener Hochlauf des Motors 7 vor.

Abschließend ist noch anzumerken, daß durch ein zusätzliches UND-Glied 30 gemäß Fig. 2 ein Anregesignal ohne Berücksichtigung des erhöhten Spannungsschwellenwertes U₁ erzeugt werden kann, wenn der Kontakt 20 in die "Aus"-Stellung gebracht ist. In diesem Falle tritt trotz Vorliegens eines Stromunterschreitungssignals Iᵤ am Ausgang des UND-Gliedes 19 ein "0"-Signal auf, das nach Invertierung an einem Eingang 31 des zusätzlichen UND-Gliedes 30 zu einem "1"-Signal am Ausgang dieses UND-Gliedes führt, wenn von einem Block 32 ein Signal bei einem Unterschreiten der Spannung U(t) unter den üblichen Anrege-Wert Uₐ abgegeben wird. Am Ausgang des ODER-Gliedes 28 ergibt sich auch in diesem Falle ein Auslösesignal.

## Patentansprüche

1. Anordnung mit einem an ein elektrisches Energieversorgungsnetz angeschlossenen Leitungsabgang (1) mit einem Leistungsschalter (2) und mit mindestens einem Motor (7) und mit einer Unterspannungs-Schutzanordnung (12) für den mindestens einen Motor, bei der die Unterspannungs-Schutzanordnung über eine Spannungswandler-Anordnung an den Leitungsabgang angeschlossen ist, und bei der die Unterspannungs-Schutzanordnung (12) über eine Stromwandler-Anordnung (3) mit dem Leitungsabgang (1) verbunden ist,
**dadurch gekennzeichnet,** daß
die Unterspannungs-Schutzanordnung (12) so ausgebildet ist, daß sie
ein Stromunterschreitungssignal (Iᵤ) bildet, wenn der mittels der Stromwandler-Anordnung (3) ermittelte Strom (I(t))durch den Leitungsabgang (1) unterhalb eines vorgegebenen Stromschwellenwertes (I_{S}) liegt,
dieses Stromunterschreitungssignal (Iᵤ) nach einem Anstieg des Stromes (I(t)) über den Stromschwellenwert (Iₛ) für eine vorgewählte Zeitdauer (Tᵤ) aufrechterhält,
während des Stromunterschreitungssignals (Iᵤ) einen gegenüber dem üblichen Spannungs-Anregewert (Uₐ) erhöhten Spannungsschwellenwert (Uₗ) definiert, und
ein Anregesignal (An) erzeugt, wenn die mittels der Spannungswandler-Anordnung (8) erfaßte Spannung (U(t)) an dem Leitungsabgang (1) während des Stromunterschreitungssignals (Iᵤ) unter den erhöhten Spannungsschwellenwert (Uₗ) absinkt.

## Claims

1. Arrangement with an outgoing circuit (1) which is connected to an electrical power-supply network, with a circuit-breaker (2) and with at least one motor (7) and with an undervoltage-protection arrangement (12) for the at least one motor, wherein the undervoltage-protection arrangement is linked to the outgoing circuit via a voltage-transformer arrangement, and wherein the undervoltage-protection arrangement (12) is connected to the outgoing circuit (1) via a current-transformer arrangement (3),
characterised in that
the undervoltage-protection arrangement (12) is designed in such a way that it
creates a current-undershoot signal (Iᵤ) if the current (I(t)) through the outgoing circuit (1) which is ascertained by means of the current-transformer arrangement (3) lies below a predetermined current threshold (Is),
maintains this current-undershoot signal (Iᵤ) for a preselected period of time (Tᵤ) after a rise in the current (I(t)) above the current threshold (Iₛ), defines during the current-undershoot signal (Iᵤ) a voltage threshold (Uₗ) that is increased in comparison with the conventional voltage-activating value (Uₐ) and generates an activating signal (An) if the voltage (U(t)) at the outgoing circuit (1) which is registered by means of the voltage-transformer arrangement (8) falls below the increased voltage threshold (Uₗ) during the current-undershoot signal (Iᵤ).

## Revendications

1. Dispositif comportant un départ (1) de lignes raccordé à un réseau électrique d'alimentation en énergie, comportant un disjoncteur (2) et comportant au moins un moteur (7) et comportant un dispositif (12) de protection contre les sous-tensions pour le au moins un moteur, le dispositif de protection contre les sous-tensions étant raccordé au départ de lignes par l'intermédiaire d'un dispositif transformateur de tension et le dispositif (12) de protection contre les sous-tensions étant relié au départ (1) de lignes par l'intermédiaire d'un dispositif (3) transformateur de courant,
caractérisé en ce que
le dispositif (12) de protection contre les sous-tensions est réalisé de manière
à former un signal (Iᵤ) de sous-dépassement de courant si le courant (I(t)) passant dans le départ (1) de lignes et déterminé par le dispositif (3) transformateur de courant est inférieur à une valeur (Iₛ) seuil de courant prescrite,
à maintenir ce signal (Iᵤ) de sous-dépassement de courant après une augmentation du courant (I(t)) au-dessus de la valeur (Iₛ) seuil de courant pour une durée (Tᵤ) choisie à l'avance,
à définir pendant le signal (Iᵤ) de sous-dépassement de courant une valeur (U₁) seuil de tension augmentée par rapport à la valeur (Uₐ) d'excitation de tension usuelle,
et à produire un signal (An) d'excitation si la tension (U(t)) sur le départ (1) de lignes déterminée au moyen du dispositif (8) transformateur de tension s'abaisse pendant le signal (Iᵤ) de sous-dépassement de courant au-dessous de la valeur (U₁) seuil de tension augmentée.
